# EUROPEAN PATENT APPLICATION

(11) **EP 2 866 158 A1**
(43) Date of publication of application: **29.04.2015**
(21) Application number: 13810399.9
(22) Date of filing: 25.06.2013
(51) Int. Cl.: G06F 17/30

(54) **METHOD FOR READER TO PROVIDE SERVICE, READER, TERMINAL AND COMPUTER STORAGE MEDIUM**

(30) Priority: 26.06.2012 CN 201210213305
(71) Applicant: Tencent Technology (Shenzhen) Co., Ltd, Guangdong 518000 (CN)
(72) Inventor: SUN, Liguang, Shenzhen Guangdong 518000 (CN); SU, Rong, Shenzhen Guangdong 518000 (CN); HUANG, Xiaopeng, Shenzhen Guangdong 518000 (CN); YANG, Tao, Shenzhen Guangdong 518000 (CN); LIU, Nian, Shenzhen Guangdong 518000 (CN); DONG, Xiaolong, Shenzhen Guangdong 518000 (CN); WANG, Zheng, Shenzhen Guangdong 518000 (CN); MA, Qunli, Shenzhen Guangdong 518000 (CN); REN, Shuo, Shenzhen Guangdong 518000 (CN); ZHANG, Tianfu, Shenzhen Guangdong 518000 (CN)
(74) Representative: Noble, Nicholas
(86) International application number: PCT/CN2013/077923
(87) International publication number: WO 2014/000635

(57) **Abstract**

Disclosed are a method for a reader to provide a service, a reader, a terminal and a computer storage medium. The method includes: obtaining and displaying, by a reader, at least one piece of plugin information, the plugin information including at least a plugin name; determining plugin information selected by a user from the at least one piece of plugin information, and downloading a corresponding plugin file according to the selected plugin information; and installing a plugin according to the downloaded plugin file, and invoking the plugin installed to provide a corresponding service. By enabling the reader to download a corresponding plug-in file according to plug-in information selected by a user, i.e., downloading the corresponding plug-in file according to the user's needs, the size of a reader installation package in the present disclosure can be controlled effectively, thereby saving traffic. In addition, by invoking an installed plug-in to provide a corresponding service, the types of services provided by the reader can be expanded, thereby satisfying the personalized need of a user and enhancing the reading experience.

## Description

### FIELD

The present disclosure relates generally to the field of computer technology, and more particularly to a method for a reader to provide service, a reader, a terminal and a computer storage medium.

### BACK GROUND

With the development of computer technology and the popularization of the network application, information experiences explosive growth. To enable users reading more conveniently and efficiently, a variety of readers come into being. Thus, the service provided by a reader to enrich the user's reading experience has become a criterion of scoring the performance of a reader that.

Regarding the service, the existing readers simply obtain the content selected by a user and display it in a predetermined way to the user.

Generally, the service provided by the existing readers is to provide basic reading function, which is restricted to obtaining the reading content and displaying it in a predetermined way. Thus, the service they provide is too simple, and not expandable enough to satisfy the user's individual needs.

### DETAILED DESCRIPTION

In order to expand the service provided by a reader to meet users' individual needs and to enhance the reading experience, the present disclosure provides a method for a reader to provide service, a reader, a terminal and a computer storage medium.

According to one aspect of disclosure, a method for a reader to provide service includes:
obtaining and displaying, by a reader, at least one piece of plugin information, the plugin information including at least a plugin name;
determining plugin information selected by a user from the at least one piece of plugin information, and downloading a corresponding plugin file according to the selected plugin information;
installing a plugin according to the downloaded plugin file, and invoking the plugin installed to provide a corresponding service.

According to another aspect of the disclosure, a reader includes:
an obtaining module, configured to obtain at least one piece of plugin information, the plugin information including at least a plugin name;
a first display module, configured to display the at least one piece of plugin information obtained by the obtaining module;
a determining module, configured to determine plugin information selected by a user from the at least one piece of plugin information displayed by the first display module;
a downloading module, configured to download a corresponding plugin file according to the plugin information determined by the determining module;
an installing module, configured to install a plugin according to the plugin file downloaded by the downloading module;
a processing module, configured to invoke the plugin installed by the installing module to provide a corresponding service.

According to a further aspect of the disclosure, a terminal is provided, which includes any one of the above reader.

The present technology brings about advantages. By enabling the reader to download a corresponding plug-in file according to plug-in information selected by a user, i.e., downloading the corresponding plug-in file according to the user's needs, the size of a reader installation package in the present disclosure can be controlled effectively, thereby saving traffic. In addition, by invoking an installed plug-in to provide a corresponding service, the types of services provided by the reader can be expanded, thereby satisfying the personalized need of a user and enhancing the reading experience.

### BRIEF DESCRIPTION OF THE DRAWINGS

The accompanying drawings illustrate one or more embodiments of the invention and together with the written description, serve to explain the principles of the invention. Wherever possible, the same reference numbers are used throughout the drawings to refer to the same or like elements of an embodiment.
Fig. 1 is a flow chart showing a method for a reader to provide a service in accordance with a first embodiment of the disclosure.
Fig. 2 is a flow chart showing a method for a reader to provide a service in accordance with a second embodiment of the disclosure.
Fig. 3 is a schematic diagram showing an interface for displaying plugin information in accordance with a second embodiment of the disclosure
Fig. 4 is a schematic diagram showing an interface for displaying plugin icon in accordance with a second embodiment of the disclosure.
Fig. 5 is a structure schematic diagram of a reader in accordance with a third embodiment of the disclosure.
Fig. 6 is a structure schematic diagram of another reader in accordance with a third embodiment of the disclosure.
Fig. 7 is a partial structure block diagram of a terminal in accordance with the present disclosure.

### DETAILS DESCRIPTION

In the following description of embodiments, reference is made to the accompanying drawings which form a part hereof, and in which it is shown by way of illustration specific embodiments of the disclosure that can be practiced. It is to be understood that other embodiments can be used and structural changes can be made without departing from the scope of the disclosed embodiments.

### Embodiment I

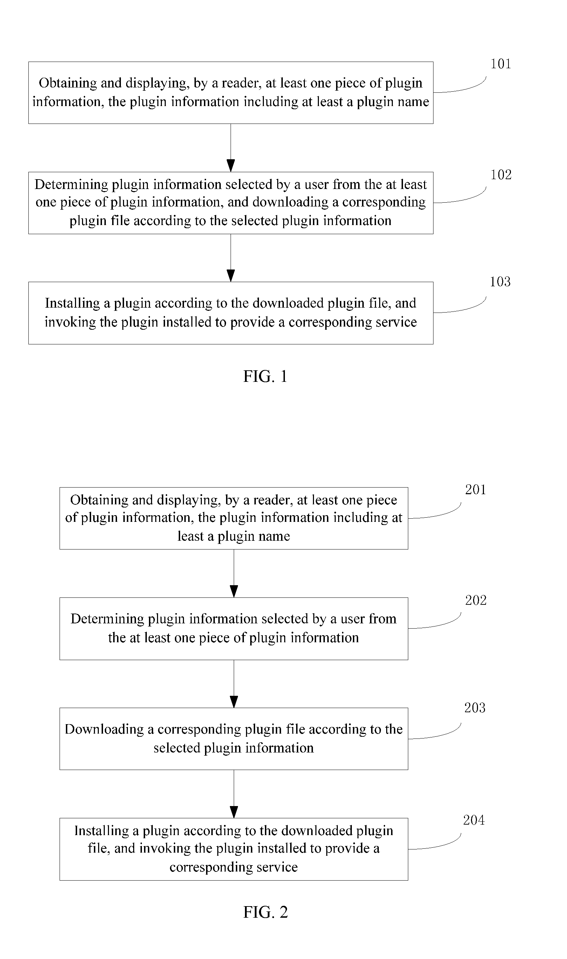

In the embodiment, a method for a reader to provide a service is provided. By invoking a plugin to provide a corresponding service, the types of services provided by the reader are expanded. Fig 1 illustrates the method process according to the embodiment.
101: Obtaining and displaying, by a reader, at least one piece of plugin information, the plugin information including at least a plugin name.

Further, after obtaining and displaying the at least one piece of plugin information, the method includes:
obtaining and displaying updated plugin information, the updated plugin information including at least a plugin name and version updated.
102: Determining plugin information selected by a user from the at least one piece of plugin information displayed, and downloading a corresponding plugin file according to the plugin information selected.

Herein, each piece of plugin information of the at least one piece of plugin information displayed corresponds to a plugin flag, and a corresponding relation is pre-built between a plugin flag and a downloading address of a plugin file.

The downloading may include:
obtaining a corresponding downloading address of a plugin file according to the corresponding plugin icon of the plugin information selected, and downloading the corresponding plugin file according to the obtained downloading address of a plugin file.

Further, the plugin file downloaded includes at least one of a resource image file in the network, a TTF file and a plugin code file.

Herein, the code corresponding to the resource image file in the network may be pre-set locally.
103: Installing the plugin according to the downloaded plugin file, and invoking the installed plugin to provide a corresponding service.

The method further includes, after installing the plugin according to the downloaded plugin file, the step of:
displaying a corresponding plugin icon of a plugin installed, and invoking the plugin installed to provide a corresponding service according to the plugin icon selected by a user.

In the method provided by the embodiment, by downloading a corresponding plug-in file according to plug-in information selected by a user, i.e., downloading a corresponding plug-in file according to the demand of the user, the size of a reader installation package can be controlled effectively, thereby saving traffic. In addition, by invoking an installed plug-in to provide a corresponding service, the types of services provided by the reader can be expanded, thereby satisfying the personalized demand of a user and enhancing the reading experience. Besides, by obtaining and displaying the updated plugin information, new plugins may be continuously configured accordingly to meet the users' needs. By displaying the installed plugin icon, an installed plugin may be invoked directly to provide a corresponding service, thereby improving the service efficiency.

The method for a reader to provide service will be further illustrated in detail with reference to the following embodiment.

### Embodiment II

This embodiment provides a method for a reader to provide service. In order to better illustrate it, a reader providing service on a mobile terminal is taken as an example. Referring to Fig. 2, the process of the method of the embodiment is as follows.
201: obtaining and displaying, by a reader, at least one piece of plugin information, the piece of plugin information including at least a plugin name.

In the present embodiment, there is no limitation to the way that a reader obtains the at least one piece of plugin information, or to the specific plugin information obtained. In order to specify the function of available plugins, the plugin information includes at least a plugin name, and may further include the detail description of the plugin, etc. Specifically, a plugin list may be stored in the server side of the network side, or stored locally. The plugin list, wherever it is stored, includes at least one piece of plugin information. The plugin information may be information about content-related plugins which relate to the reading content. For example, if the reading content is plain text, then the content-related plugins may include but not limit to a listing plugin, a dictionary plugin, a font plugin, a PDF (Portable Document Format) format support plugin, etc. When the reading content includes images, then the content-related plugins may further include an image processing plugin, etc.

When obtaining the at least one piece of plugin information, irrespective of the plugin information contained in the plugin list, the plugin list may be obtained from the server by connecting to the server through the network if the plugin list is stored in the server side of the network side, or directly obtained from the local if the plugin list is stored locally.

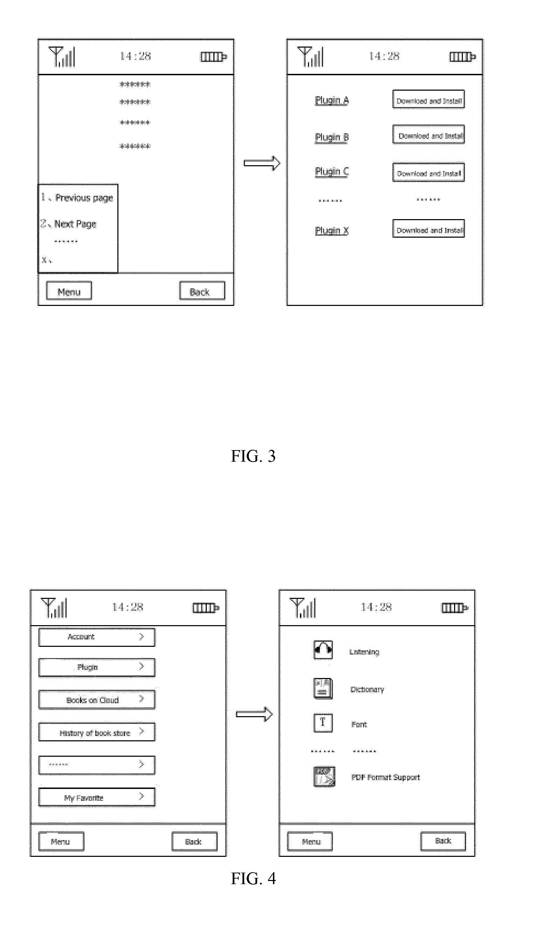

When displaying the at least one piece of plugin information obtained, the reader may display directly the plugin list obtained. The way of displaying will not be limited. To be better understood, taking the interface illustrated in Fig. 3 for example. In Fig.3, a region displayed as "*" represents the reading content displayed. Besides displaying the reading content on the present interface, an option of plugin list is further configured in a menu of the present interface. By clicking the option of plugin list in the menu, the display interface may be triggered to switch from the interface shown in the left of Fig. 3 to the interface containing plugin information shown in the right of Fig. 3. The right interface in Fig. 3 is configured to provide, besides the plugin information, an option of "Download and Install" for users to select the desired plugin from the plugin information displayed.

Further, with the continuous development of information technology, new plugins are being developed, or the functions of existing plugins are keeping updated. To provide timeliness service by a reader, enrich the variety of the callable plugins and keep expanding the types of the services, the method further includes, after obtaining and displaying at least one piece of plugin information, the step of: obtaining and displaying updated plugin information. For plugin information not being obtained ever, the updated plugin information obtained may at least include name of the plugin updated. For plugin information obtained already, if the plugin function of the plugin information is updated, the plugin name may not need updating, and the updated version may be added into the updated plugin information to determine whether to download the plugin of the new version according to the updated version.

For example, when there is a new plugin or a new version for upgrading, the version of the plugin list may be updated by the server side. The plugin information in the plugin lists of different versions are the corresponding plugin information of the updated plugin. Thus, it is possible to check by connecting to the server whether there is an update of the plugin list. If there is an update, then prompt the user to update the list, and thereby triggering the downloading of the new plugin or plugin of the new version from the server side. The updated plugin information may include not only name and version of the updated plugin, but also other information. The specific content of the updated plugin information will not be limited hereto.
202: Determining the plugin information selected by a user from the at least one piece of plugin information.

For this step, after displaying the at least one piece of plugin formation in step 201, the user may immediately know which plugins are available for downloading for the reading content. The way in which a user selects the at least one piece of plugin information from the displayed plugin information is not limited hereto. As shown in Fig. 3, for example, when displaying in the present interface the pluging information, a "Download and Install" option is provided following each piece of plugin information. The user may select and obtain the plugin information by clicking the "Download and Install" option, and the reader may determine the plugin information selected by user based on the click operation of the user. The method may further provide, besides the selection of plugin information illustrated in Fig.3, other selection methods which will not be limited hereto.
203: Downloading a corresponding plugin file according to the plugin information selected.

Specifically, after determining in step 202 the plugin information selected from the displayed at least one piece of plugin information by user, downloading of the corresponding plugin file according to the plugin information selected may be triggered. The specific way of downloading is not limited hereto. In practical application, a plugin flag may be set to a corresponding plugin of each piece of plugin information, and a corresponding relation may be built between each plugin flag and the downloading address of the plugin file. If the plugin list containing plugin information is stored by server, then the corresponding relation between the plugin flag and plugin's downloading address may be stored in the server as well. If the plugin list including plugin information is stored locally, then the corresponding relation between the plugin flag and plugin's downloading address may be stored locally. For example, a corresponding relation shown in the following Table 1:

**Table 1**

| Pluglin Flag | Downloading Address of the Plugin File |
|---|---|
| Plugin A | http://www.xyza.com |
| Plugin B | http://www.abcxyz.com |
| ...... | ...... |
| Plugin X | http://www.****.com |

Referring to the relation between the plugin flag and downloading address of a plugin file in the above Table 1, each piece of plugin information of at least one piece of plugin information displayed may correspond to a plugin flag as well. Because of the pre-built corresponding relation between the plugin flag and downloading address of a plugin file, the method may include but not limited to, when downloading the corresponding plugin file according to the selected plugin information, the following step:
obtaining a downloading address of a plugin file according to the corresponding plugin flag of the plugin information selected, and downloading corresponding plugin file according to the downloading address obtained.

The downloading of corresponding plugin file according to the obtained downloading address of a plugin file may be realized based on existing file download methods and may not be limited hereto. Besides using plugin flag corresponding to a downloading address of a plugin file, the plugins may also be classified into categories, with each category having a corresponding plugin flag, so as to improve the reusability of the code. Each piece of plugin information corresponds not only to a plugin flag, but also to a classification flag. When downloading the corresponding plugin file according to the selected plugin information, it is possible to search for a corresponding classification detail according to the corresponding classification flag of the selected plugin information; then, the plugin flag and consequently corresponding downloading address of a plugin file are obtained according to the different classification, so as to download the corresponding plugin file according to the obtained downloading address of a plugin file.

The format of a plugin file includes but not limited to a code file, a TTF file, a resource image file etc. In additional, there are other formats, which are not limited hereto. Different types of plugins have different formats. For example, for a font plugin, the format of the plugin file is a TTF file. For a dictionary, a PDF format support plugin, the format of the plugin file is a code file. For a resource image file, it is possible to pre-set the corresponding code locally, download corresponding resource image file according to the downloading address of a plugin file, and further draw the downloaded resource image file by the build-in code. For a font file, it is possible to download directly corresponding TTF file according to the downloading address of a plugin file. For a code file, thanks to the existing abundant .so pool, it is possible to obtain corresponding code from the .so pool containing logic by Java reflection mechanism according to the downloading address of a plugin file.
204: Installing a plugin according to the plugin file downloaded and providing a corresponding service by invoking the plugin installed.

In this step, the installing of a plugin may be realized based on the existing plugin installation methods, which is not limited hereto. After the plugin is successfully installed, a corresponding service may be provided by invoking the plugin installed. For example, if the plugin installed is a font plugin, then it is possible to process the font of reading content by invoking the font plugin and to provide a font-related service. If the plugin installed is a dictionary plugin, then it is possible to inquire the reading content by invoking the dictionary plugin and to provide an inquiry service. If the installed plugin is a listening plugin, then it is possible to listen to the reading content by invoking the listening plugin and to provide a listening service. If the installed plugin is a small game plugin, then it is possible to make the user relaxed during the reading intervals by invoking such small game plugin and to provide an entertainment service.

Further, in order to avoid downloading plugin file and installing the plugin every time, and to improve the processing for the reading content, for the plugin installed successfully, the method provided by this embodiment further provides an entry to invoke the plugin quickly. In practical application, the method may include, after installing the plugin according to the downloaded plugin file, the step of:
displaying a corresponding plugin icon of the plugin installed, and invoking directly the plugin installed according to the plugin icon selected by user to provide a corresponding service.

Herein, the display of the corresponding plugin icon of the plugin installed is not limied hereto. In Fig. 4, a plugin entry is provided in the left interface. The plugin icon interface showing in the right of Fig.4 may be opened by selecting the plugin entry by user. In the plugin icon interface in the right of Fig.4, the corresponding plugin icons of the plugins currently installed are displayed, including for example, a listening plugin icon, a dictionary plugin icon, a font plugin icon and a PDF format support plugin icon etc. It is possible to trigger the background to invoke the corresponding plugin of the plugin icon, and then provide a corresponding service by invoking the plugin.

In the method provided by the embodiment, by downloading a corresponding plug-in file according to plug-in information selected by a user, i.e., downloading a corresponding plug-in file according to the demand of the user, the size of a reader installation package can be controlled effectively, thereby saving traffic. In addition, by invoking an installed plug-in to provide a corresponding service, the types of services provided by the reader can be expanded, thereby satisfying the personalized demand of a user and enhancing the reading experience. Besides, by obtaining and displaying the updated plugin information, new plugins may be continuously configured accordingly to meet the users' needs. By displaying the installed plugin icon, an installed plugin may be invoked directly to provide a corresponding service, thereby improving the service efficiency.

### Embodiment III

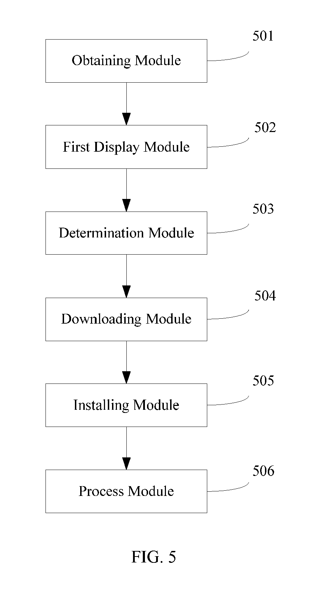

This embodiment provides a reader; the reader is configured to execute the method for a reader to provide a service according to the above embodiment I and embodiment II. Refer to Fig.5, the reader includes:
an obtaining module 501, configured to obtain at least one piece of plugin information, the plugin information including at least a plugin name;
a first display module 502, configured to display the at least one piece of plugin information obtained by the obtaining module 501;
a determining module 503, configured to determine plugin information selected by a user from the at least one piece of plugin information displayed by the first display module 502;
a downloading module 504, configured to download a corresponding plugin file according to the plugin information determined by determining module 503;
an installing module 505, configured to install a plugin according to the plugin file downloaded by downloading module 504;
a processing module 506, configured to invoke the plugin installed by installing module 505 to provide a corresponding service.

Herein, each piece of plugin information of the at least one piece of plugin information displayed by the first display module 502 corresponds to a plugin flag, and a corresponding relation is pre-built between a plugin flag and a downloading address of a plugin file.

The downloading module 504 is specifically configured to obtain the corresponding downloading address of a plugin file according to the corresponding plugin flag of the plugin information selected, and to download the corresponding plugin file according to the obtained downloading address of a plugin file.

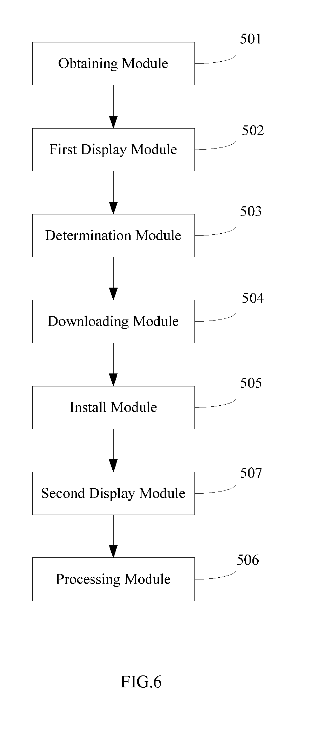

Further, with reference to the related description of step 204 in the embodiment II and Fig.6, the reader further includes:
a second display module 507, configured to display a corresponding plugin icon of the plugin installed by installing module 505;
a processing module 506, configured to invoke directly the plugin installed according to the user selection of the plugin icon displayed by the second display module 507, and to provide a corresponding service.

Further, with reference to the related description of step 201 in the embodiment II, the obtaining module 501 is further configured to obtain plugin information updated, the plugin information updated including at least name and version of a plugin updated.

The first display module 502 is further configured to display updated plugin information obtained by obtaining module 501.

Further, with reference to the related description of step 204 in the embodiment II, the plugin files downloaded by downloading module 504 include at least one of a resource image file in the network, a TTF file, and a plugin code file.

The corresponding code of the resource image file in the network may be pre-set locally.

The method for obtaining module 501 to obtain at least one piece of plugin information, and the method for first display module 502 to display the at least one piece of plugin information obtained by obtaining module 501 are described in detail in the step 201 in the embodiment II. Such details will not be discussed in details herein. The method for determining module 503 to determining the plugin information selected by user from the displayed at least one piece of plugin information, is described in detail in the step 203 in the embodiment II. Such details will not be discussed in details herein. The method of downloading module 504 to download corresponding plugin file according to the pugin information selected is described in detail in the step 203 in the embodiment II. Such details will not be discussed in details herein. The method for installing module 505 to install the plugin according to the downloaded plugin file, and the method for processing module 506 to process the reading content by invoking the installed plugin are described in detail in the step 204 in the embodiment II. Such details will not be discussed in details herein.

By the reader provided by the embodiment, by downloading a corresponding plug-in file according to plug-in information selected by a user, i.e., downloading a corresponding plug-in file according to the demand of the user, the size of a reader installation package can be controlled effectively, thereby saving traffic. In addition, by invoking an installed plug-in to provide a corresponding service, the types of services provided by the reader can be expanded, thereby satisfying the personalized demand of a user and enhancing the reading experience. Besides, by obtaining and displaying the updated plugin information, new plugins may be continuously configured accordingly to meet the users' needs. By displaying the installed plugin icon, an installed plugin may be invoked directly to provide a corresponding service, thereby improving the service efficiency.

### Embodiment IV

This embodiment provides a terminal, which includes the reader provided by the above embodiment III.

Herein, the terminal may specifically be a mobile terminal, or a computer terminal, or other form terminals; this embodiment does not restrict the specific forms.

By the terminal provided by the embodiment, by downloading a corresponding plug-in file according to plug-in information selected by a user, i.e., downloading a corresponding plug-in file according to the demand of the user, the size of a reader installation package can be controlled effectively, thereby saving traffic. In addition, by invoking an installed plug-in to provide a corresponding service, the types of services provided by the reader can be expanded, thereby satisfying the personalized demand of a user and enhancing the reading experience. Besides, by obtaining and displaying the updated plugin information, new plugins may be continuously configured accordingly to meet the users' needs. By displaying the installed plugin icon, an installed plugin may be invoked directly to provide a corresponding service, thereby improving the service efficiency.

It is noted that when the reader provided by the above embodiment provides a service, the description simply takes the division of the above function modules for example; while in real practice, the the above functions may be assigned to different function modules to achieve according based on the needs, i.e. it divides the inner structure of a reader to different function modules to achieve above all or partial functions. In addition, the terminal, the reader and the method for a reader to provide a service in the the above embodiments belong to the same conception, the specific process of realization described in detail in the method embodiment. Such details will not be discussed in details herein.

The reference numbers of the above embodiments of present technology is used only for illustration, which do not represent the advantage of each embodiment.

It should be noted that for a person skilled in the art, partial or full process to realize the methods in the above embodiments can be accomplished by related hardware instructed by a computer program, the program can be stored in a computer readable storage medium and the program can include the process of the embodiments of the above methods. Wherein, the storage medium can be a disk, a light disk, a Read-Only Memory or a Random Access Memory, etc.

Thus, according to the above embodiments of present disclosure, the present disclosure further provides a non-transitory computer-readable storage medium storing computer-executable instructions which, when executed by one or more computer processors, cause the one or more computer processors to perform a method for a reader to provide service described in any one of the above embodiments.

The methods in the above embodiments may be installed on corresponding machinery equipments in the form of software. When running, the program executes the process providing a service by controlling relevant processing equipment. Accordingly, said client may be configured to be installed on a corresponding terminal device, or may be a corresponding terminal device itself. The terminal device may be any kind of terminal device: a mobile phone, a tablet PC, a PDA (Personal Digital Assistant), a POS (Point of Sales), an Auto PC, etc.

According to this, based on the method and the system for a reader to provide a service, the present disclosure further provides a terminal device. The terminal device may be one of any terminal device which may need a reader to provide a service, such as a mobile phone, a tablet PC, a PDA (Personal Digital Assistant), a POS (Point of Sales), an Auto PC,etc.

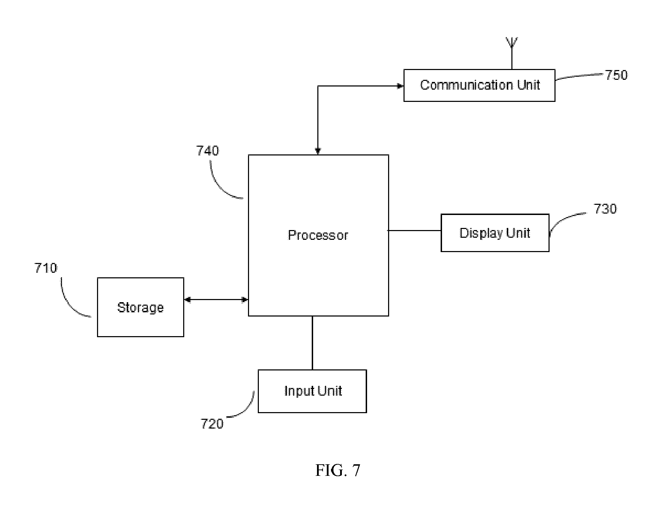

According to this, taking one of terminal devices for example, Fig. 7 illustrates the structure diagram of partial part of the terminal device. Referring to Fig.7, the terminal device includes: a memory 710, an input unit 720, a display unit 730, a processor 740, a communication module 750 etc. The skilled person in the art may understand that the structure in Fig.7 is only the structure diagram of the relevant parts of the embodiments of present technology and does not limit the terminal device applied for present technology. The specific terminal device may include more or less members, or combinations of some members, or different arrangement of members than the one showing in the Fig.7.

The respective member of the terminal device will be described in detail with reference to Fig.7.

A memory 710 may be configured to store a software program and module. A processor 740 executes the software program and module stored in the memory 710 and consequently executes all the corresponding functional applications and data process of the terminal device. The memory 710 may mainly include a program storage zone and a data storage zone, wherein the program storage zone may store an operation system, an application program required by at least one function (for example voice playing function, image playing function etc.); a data storage zone may store the data created according to the usage of the terminal device, etc. In additional, the memory 710 may include a high speed random access memory, further include a nonvolatile memory, for example at least one disk storage member, a flash storage member, or other volatile solid-state storage member.

An input unit 720 may be configured to receive inputted figures, characters or other information, and to generate a key signal input relevant to the user configuration and the functional control of the terminal device. Specifically in the embodiment of present technology, it may be the plugin information from the at least one piece of the plugin information selected by input unit 720.

In specifically, taking a mobile phone as the terminal device for example, the input unit 720 may include a touch panel and other input devices. A touch panel, also called touch screen, may collect the touch operation on or around itself (for example the operation on or around the touch panel using figure, touch pen or any other suitable object or accessory by user), and may drive corresponding connection device according to the pre-set program. Optionally, a touch panel may include two parts: a touch detective device and a touch controller. Herein, the touch detective device detects user's touch position, and detects the signal brought by the touch operation. Then it transmits the signal to the touch controller. The touch controller receives touch information from touch detective device, and transforms the touch information to a contact coordinate, and then transmits the contact coordinate to processor 740. It may also receive the instruction from processor 740 and execute it.

In additional, the touch panel may use variety of types such as the resistance-type, capacitance-type, infrared and surface acoustic wave etc. Besides the touch panel, an input unit 720 may include other input devices. In specifically, other input units may include but not limited to one or several of a physical keyboard, a functional key (for example a volume control button, an on-off button etc.), a trackball, a mouse, an action bar etc.

A display unit 730 may be configured to display the information input by user or the information and all kinds of menus provided to user. The display unit 730 may include a display panel. Optionally, the display panel may be configured by LCD (Liquid Crystal Display), OLED (Organic Light-Emitting Diode) or other forms. Specifically in this embodiment, the display panel displays at least one piece of plugin information which includes a plugin name, and shows user the installed downloaded plugin by the display unit 730.

A terminal device may communicate with a server through a communication module 750. The communication unit 750 may be realized by any possible method, for example, a WIFI module, blue tooth communication, fiber communication etc. The communication between the terminal device and the server is realized through the communication module 750, and it is possible that the terminal device may send relevant information (for example the download request information in this embodiment etc.) to the server, and receive the returned relevant information (for example the plugin file installing plugin etc) from the server.

A processor 740 is the control center of a terminal device. It connects all the members of the whole terminal device by using all kinds of interface and route. And it executes all the functions and data process of the terminal device by operating or executing the software program and/or modules stored in memory 710 and by invoking the data stored in memory 710. As a result, it may totally monitor the terminal device. Optionally, the processor 740 may include one or more processing units.

The embodiments are chosen and described in order to explain the principles of the disclosure and their practical application so as to allow others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A method for a reader to provide a service, comprising:
obtaining and displaying, by a reader, at least one piece of plugin information, the plugin information including at least a plugin name;
determining plugin information selected by a user from the at least one piece of plugin information, and downloading a corresponding plugin file according to the selected plugin information; and
installing a plugin according to the downloaded plugin file, and invoking the plugin installed to provide a corresponding service.

2. The method of claim 1, wherein each piece of plugin information of the at least one piece of plugin information displayed corresponds to a plugin flag, and a corresponding relation is pre-built between the plugin flag and a downloading address of a plugin file; and
the downloading comprising:
obtaining a corresponding downloading address of a plugin file according to the corresponding plugin icon of the plugin information selected, and downloading the corresponding plugin file according to the obtained downloading address of a plugin file.

3. The method of claim 1, further comprising, after installing the plugin according to the downloaded plugin file, the step of:
displaying a plugin icon corresponding to the plugin installed, and invoking the plugin installed according to the plugin icon selected by the user to provide a corresponding service.

4. The method of claim 1, further comprising, after obtaining and displaying the at least one piece of plugin information, the step of:
obtaining and displaying updated plugin information, the updated plugin information comprising at least name and version of an updated plugin.

5. The method of any one of claims 1 to 4, wherein the plugin file downloaded comprises at least one of a resource image file in the network, a TTF file, and a plugin code file; and
a corresponding code of the resource image file in the network is pre-set locally.

6. A reader, comprising:
an obtaining module, configured to obtain at least one piece of plugin information, the plugin information including at least a plugin name;
a first display module, configured to display the at least one piece of plugin information obtained by the obtaining module;
a determining module, configured to determine plugin information selected by a user from the at least one piece of plugin information displayed by the first display module;
a downloading module, configured to download a corresponding plugin file according to the plugin information determined by the determining module;
an installing module, configured to install a plugin according to the plugin file downloaded by the downloading module;
a processing module, configured to invoke the plugin installed by the installing module to provide a corresponding service.

7. The reader of claim 6, wherein each piece of the at least one piece of the plugin information displayed by the first display module corresponds to a plugin flag, and a corresponding relation is pre-built between the plugin flag and the downloading address of a plugin file; and
the downloading module is further configured to obtain a corresponding downloading address of a plugin file according to the corresponding plugin flag of the plugin information selected.

8. The reader of claim 6, further comprising:
a second display module, configured to display a corresponding plugin icon of a plugin installed by the installing module;
wherein the processing module is further configured to provide a corresponding service by invoking the plugin installed according to the plugin icon displayed by the second display module selected by a user.

9. The reader of claim 1, wherein the obtaining module is further configured to obtain updated plugin information which including at least name and version of an updated plugin; and
the first display module is further configured to display the updated plugin information obtained by the obtaining module.

10. The reader of any one of claims 6 to 9, wherein the plugin file downloaded by the downloading module comprises at least one of a resource image file in the network, a TTF file and a plugin code file;
the corresponding code of the resource image file is pre-set locally.

11. A terminal, wherein the terminal comprises a reader of any one of claims 6 to 10.

12. A non-transitory computer-readable storage medium storing computer-executable instructions which, when executed by one or more computer processors, cause the one or more computer processors to perform a method for a reader to provide service, the method comprising:
obtaining and displaying, by a reader, at least one piece of plugin information, the plugin information including at least a plugin name;
determining plugin information selected by a user from the at least one piece of plugin information, and downloading a corresponding plugin file according to the selected plugin information;
installing a plugin according to the downloaded plugin file, and invoking the plugin installed to provide a corresponding service.

13. The computer storage medium of claim 12, wherein each piece of plugin information of the at least one piece of plugin information displayed corresponds to a plugin flag, and a corresponding relation is pre-built between the plugin flag and a downloading address of a plugin file; and
the downloading comprising:
obtaining a corresponding downloading address of a plugin file according to the corresponding plugin icon of the plugin information selected, and downloading the corresponding plugin file according to the obtained downloading address of a plugin file.

14. The computer storage medium of claim 12, wherein the method further comprises, after installing the plugin according to the downloaded plugin file, the step of:
displaying a plugin icon corresponding to the plugin installed, and invoking the plugin installed according to the plugin icon selected by the user to provide a corresponding service.

15. The computer storage medium of claim 12, wherein the method further comprises, after obtaining and displaying the at least one piece of plugin information, the step of:
obtaining and displaying updated plugin information, the updated plugin information comprising at least name and version of an updated plugin.

16. The computer storage medium of any one of claim 12 to 15, wherein the plugin file downloaded comprises at least one of a resource image file in the network, a TTF file, and a plugin code file; and
a corresponding code of the resource image file in the network is pre-set locally.
